# FASCICULE DE BREVET EUROPEEN

(11) **EP 2 658 083 B1**
(45) Date de publication et mention de la délivrance du brevet: **08.06.2016**
(21) Numéro de dépôt: 13164924.6
(22) Date de dépôt: 23.04.2013
(51) Int. Cl.: H02J 15/00, B64D 47/00, G05F 1/66, H02J 3/38, B60R 16/033

(54) **Système électrique d'aéronef et procédé de gestion associé**
Elektrisches System eines Luftfahrzeugs und entsprechendes Steuerungsverfahren
Aircraft electrical system and related management method

(30) Priorité: 27.04.2012 FR 1201247
(43) Date de publication de la demande: 30.10.2013
(73) Titulaire: Dassault Aviation, 75008 Paris (FR)
(72) Inventeur: Loison, Renaud, 75010 Paris (FR); Savin, Olivier, 92150 Suresnes (FR)
(74) Mandataire: Jacobson, Claude

(56) Documents cités:
- EP-A1- 2 256 851
- EP-A2- 2 070 817
- EP-A2- 2 168 868
- WO-A1-2012/012482
- US-A1- 2005 188 689
- US-A1- 2008 138 675
- US-A1- 2009 302 153

## Description

La présente invention concerne un système électrique d'aéronef, selon le préambule de la revendication 1.

Un tel système est destiné à être utilisé sur un aéronef comportant une pluralité d'équipements électriques destinés à son fonctionnement, notamment pour le pilotage, la navigation ou encore pour assurer le conditionnement de la cabine et le confort des occupants de l'aéronef.

Ces équipements comprennent par exemple des calculateurs de commande de vol, des pompes, des instruments de navigation, présentes dans le cockpit, dans la cabine et/ou dans la soute. En particulier, sur les aéronefs modernes, ces équipements comprennent des servitudes telles que des actionneurs électromécaniques, destinés par exemple à déplacer des commandes de vol, tels que des gouvernes ou des volets ou encore destinés à actionner les systèmes d'atterrissage de l'aéronef (ouverture/fermeture de trappes, déploiement/rétractation des trains et éventuellement motorisation électrique du train pour sa fonction de déplacement au sol).

Les aéronefs connus, tels que l'Airbus A380, le Boeing 787, l'Airbus A350, intègrent de plus en plus d'équipements électriques de ce type. La présence de ces équipements électriques optimise le fonctionnement de l'aéronef, augmente sa fiabilité, réduit la masse et diminue la consommation de l'aéronef.

L'utilisation de ces équipements est donc généralement très satisfaisante, même si elle engendre de nouvelles difficultés.

En particulier, dans certains états de fonctionnement, des équipements actifs tels que les actionneurs électromécaniques sont susceptibles d'injecter de la puissance électrique sur le réseau de l'aéronef.

Ceci est le cas en particulier pour les moteurs électriques des actionneurs électromécaniques qui ne peuvent pas fonctionner uniquement en mode moteur. Ainsi, lorsqu'ils entrent en mode générateur, par exemple lors d'un retour de l'actionneur vers une position de repos, ce type d'actionneur délivre une puissance électrique qui n'est pas forcément utilisable directement par le réseau électrique de l'aéronef.

Pour éviter de perturber les autres équipements électriques raccordés au réseau, la puissance régénérée est dissipée sous forme de chaleur. A cet effet, le convertisseur gérant la puissance de tout équipement susceptible de fonctionner en mode générateur inclut une résistance de dissipation (ou de freinage) pour consommer la puissance régénérée et limiter ou éviter l'injection de cette puissance sur le réseau électrique.

Une telle solution ne donne pas entière satisfaction. En effet, la résistance de dissipation doit être dimensionnée de manière précise en fonction des caractéristiques dynamiques et électriques de l'actionneur, et en particulier en fonction de la puissance instantanée et moyenne à dissiper, ainsi que du temps de décharge maximum qui garantit le retour de la tension du réseau à un niveau acceptable. De plus, la résistance de dissipation doit être capable de dissiper l'énergie emmagasinée plus rapidement que celle qui est régénérée par l'actionneur.

Pour répondre à ces contraintes, certains équipements électriques doivent être munis d'un dispositif complémentaire de régulation, qui ajoute de la complexité en termes de régulation, d'encombrement et de masse.

Dans tous les cas, la présence d'une résistance de dissipation, qui dissipe une puissance électrique sous forme de chaleur inutilisable dans l'aéronef engendre une perte inévitable de rendement électrique sur le réseau électrique.

EP 2 070 817 décrit un système de type précité.

Un but de l'invention est donc de fournir un système électrique d'aéronef, dans lequel la puissance électrique présente sur le réseau est régulée de manière fiable, même en cas d'injection de puissance non souhaitée, et qui permette néanmoins d'améliorer le rendement électrique de l'aéronef.

A cet effet, l'invention a pour objet un système selon la revendication 1.

Le système selon l'invention peut comprendre l'une ou plusieurs des caractéristiques des revendications 2 à 7, ou des caractéristiques suivantes, prise(s) isolément ou suivant toutes combinaisons techniquement possibles :
- il comporte un ensemble principal de génération électrique comprenant avantageusement un générateur entraîné en rotation par la turbine d'un moteur de l'aéronef ou par un courant de gaz engendré par un moteur de l'aéronef ;
- il comporte un ensemble auxiliaire de génération électrique raccordé au réseau électrique, l'ensemble auxiliaire étant apte à engendrer une énergie électrique d'appoint indépendamment du ou de chaque générateur électrique principal associé à un ou aux moteurs de l'aéronef
- l'ensemble de régulation est pilotable pour que dans la configuration de veille, le débit de chaque fluide d'alimentation produit par l'ensemble de conversion corresponde sensiblement au débit de chaque fluide d'alimentation consommé par la source secondaire.

L'invention a également pour objet un procédé selon la revendication 8.

Le procédé selon l'invention peut comprendre l'une ou plusieurs des caractéristiques des revendications 9 à 11, ou la caractéristique suivante, prise(s) isolément ou suivant toutes combinaisons techniquement possibles.
- dans la première étape de réinjection, le débit du ou de chaque fluide d'alimentation produit par l'ensemble de conversion correspond sensiblement au débit du ou de chaque fluide d'alimentation consommé par la source secondaire.

L'invention sera mieux comprise à la lecture de la description qui va suivre, donnée uniquement à titre d'exemple, et faite en se référant aux dessins annexés, sur lesquels :
- la figure 1 est un schéma synoptique fonctionnel d'un premier aéronef muni d'un système électrique selon l'invention, muni d'un ensemble de régulation opérant dans une configuration de veille ;
- la figure 2 est une vue analogue à la figure 1, l'ensemble de régulation opérant dans une première configuration de régulation lors de l'injection d'une puissance électrique additionnelle sur le réseau électrique ;
- la figure 3 est une vue analogue à la figure 1, l'ensemble de régulation opérant dans une deuxième configuration de régulation pour restituer une puissance électrique au réseau électrique.

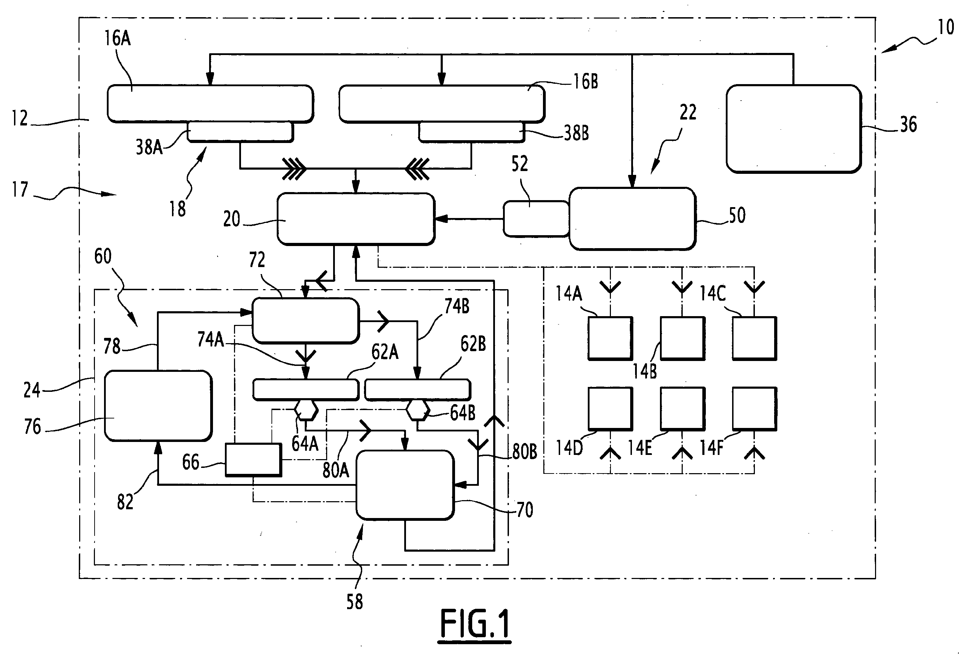

Un premier aéronef 10 selon l'invention est illustré schématiquement par la figure 1.

De manière connue, l'aéronef 10 comporte un fuselage 12 délimitant une enceinte de réception d'occupants, d'équipements fonctionnels 14A à 14F de l'aéronef 10 et éventuellement de bagages et/ou de marchandises.

L'aéronef 10 comporte en outre au moins un moteur 16A, 16B, et un système électrique 17 destiné à alimenter électriquement les équipements fonctionnels 14A à 14F.

Le système électrique 17 comporte un ensemble principal 18 de génération d'énergie électrique accouplé à au moins un moteur 16A, 16B, et un réseau électrique 20 raccordé à l'ensemble principal 18.

Selon l'invention, et comme on le verra plus bas, l'ensemble de régulation 24 est propre à absorber une injection de puissance électrique additionnelle sur le réseau électrique 20, à stocker la puissance électrique absorbée sous forme d'au moins un fluide d'alimentation d'une source secondaire de puissance électrique, et a réinjecter, si nécessaire, une puissance électrique complémentaire produite par la source secondaire sur le réseau électrique 20.

Le fuselage 12 délimite un cockpit destiné à transporter un équipage pilotant l'aéronef 10, une cabine destinée à transporter des passagers et/ou des marchandises, et une soute.

Le cockpit, la cabine, et la soute sont raccordés électriquement au réseau électrique 20 pour l'alimentation électrique des équipements électriques 14A, 14F qu'ils contiennent.

Le réseau électrique 20 est destiné à alimenter électriquement les ensembles fonctionnels de l'aéronef 10 comportant les équipements 14A à 14F.

Les équipements 14A à 14F sont notamment un calculateur de commande de vol, des pompes, des instruments de navigation, et des servitudes présentes dans le cockpit, dans la cabine et/ou dans la soute.

Au moins un équipement 14A à 14F présente un état actif, dans lequel il prélève de l'énergie électrique sur le réseau 20 en vue d'effectuer une action, et un état de régénération de puissance, dans lequel il fournit une puissance électrique au réseau électrique 20. Cette puissance rejetée sur le réseau 20 constitue une puissance électrique additionnelle par rapport à celle déjà présente sur le réseau 20.

L'équipement 14A à 14F est par exemple un actionneur, tel qu'un actionneur électromécanique, désigné par l'expression anglaise « electromechanical actuator » ou « EMA ».

Un tel actionneur électromécanique fonctionne en mode moteur dans l'état actif pour provoquer un déplacement d'un organe de commande d'une position de repos à une position active, et en mode générateur dans l'état de régénération, par exemple lors d'un retour de l'organe de commande vers la position de repos.

Dans l'état de régénération, l'équipement 14A à 14F délivre une puissance électrique au réseau 20.

La puissance électrique délivrée au réseau 20 par l'équipement 14A à 14F entre le décollage et l'atterrissage de l'aéronef est par exemple supérieure à 100 W pendant une durée supérieure à 900 s.

La puissance électrique délivrée au réseau 20 par les équipements 14A à 14F présentant un état de régénération de puissance est maximale pendant les phases d'intense utilisation des gouvernes (décollage, atterrissage et traversée de zones de turbulences) ainsi que pendant les phases de déploiement du système d'atterrissage (trappes et trains).

Chaque moteur 16A, 16B est destiné à la propulsion de l'aéronef 10, notamment pour permettre son décollage et son maintien en vol à l'écart du sol.

Dans l'exemple représenté sur la Figure 1, l'aéronef 10 comporte au moins deux moteurs 16A, 16B, le nombre de moteurs 16A, 16B pouvant être compris plus généralement entre 1 et 4.

Dans cet exemple, chaque moteur 16A, 16B est un turbo-réacteur comprenant une turbine entraînée en rotation par la combustion d'un combustible liquide (tel que du kérosène) pour engendrer une poussée.

A cet effet, chaque moteur 16A, 16B est raccordé à au moins un réservoir 36 de combustible liquide.

Dans l'exemple représenté sur la Figure 1, l'ensemble principal 18 de génération électrique comporte un générateur 38A, 38B comportant au moins un rotor (non représenté) entraîné en rotation par la turbine d'un moteur 16A, 16B ou par un courant de gaz engendré par le moteur 16A, 16B. Le générateur 38A, 38B comporte un stator.

Le générateur 38A, 38B est ainsi apte à produire une énergie électrique lors de la rotation de la turbine du moteur 16A, 16B, au sol, ou en vol.

Chaque générateur 38A, 38B est raccordé électriquement au réseau électrique 20 pour fournir l'énergie électrique qu'il produit au réseau 20.

L'ensemble auxiliaire 22 est par exemple formé par un système autonome 50 de génération électrique, apte à engendrer une énergie électrique d'appoint indépendamment de chaque générateur électrique 38A, 38B accouplé à chaque moteur 16A, 16B. Le système autonome 50 est apte à engendrer une énergie électrique notamment lorsque chaque moteur 16A, 16B est à l'arrêt.

Le système 50 comporte un générateur auxiliaire 52, alimenté par du combustible liquide fourni par exemple par le réservoir 36, ou par un réservoir autonome (non représenté).

Le générateur auxiliaire 52 comporte généralement un arbre rotatif (non représenté) et une turbine de puissance apte à entraîner en rotation l'arbre rotatif sous l'effet d'un gaz comprimé dans une chambre de combustion alimentée par le combustible.

Un tel système 50 est par exemple décrit dans les demandes de brevet en France n° 11 01512 et n° 11 01511 de la Demanderesse.

L'ensemble auxiliaire 22 est ainsi apte à fournir de l'énergie électrique au réseau 20 indépendamment de l'énergie électrique fournie par l'ensemble principal 18, et notamment en l'absence d'énergie électrique fournie par l'ensemble principal 18, par exemple lorsque les moteurs 16A, 16B sont à l'arrêt ou en complément de ceux-ci.

Avantageusement, l'ensemble auxiliaire 22 est également apte à réaliser le conditionnement de l'atmosphère présente dans l'enceinte, tel que décrit dans les demandes précitées de la Demanderesse.

Selon l'invention, l'ensemble 24 de régulation comporte une source secondaire 58 de puissance électrique, un ensemble 60 de conversion d'une puissance électrique additionnelle injectée sur le réseau 20, l'ensemble de conversion 60 étant apte à consommer la puissance électrique additionnelle pour engendrer au moins un fluide d'alimentation de la source secondaire 58.

L'ensemble de régulation 24 comporte en outre, pour chaque fluide d'alimentation engendré par l'ensemble de conversion 60, un réservoir 62A, 62B de stockage de ce fluide.

L'ensemble de régulation 24 comporte également un organe 64A, 64B de régulation de débit interposé entre chaque réservoir 62A, 62B et la source 58, et une unité 66 de commande raccordée à l'ensemble de conversion 60, à chaque organe 64A, 64B, et à la source secondaire 58 pour piloter la régulation.

Dans cet exemple, la source secondaire 58 est une pile à combustible 70.

De manière connue, la pile à combustible 70 reçoit un fluide d'alimentation réducteur gazeux et un fluide d'alimentation oxydant gazeux qui sont respectivement oxydés sur une première électrode et sur une deuxième électrode de la pile 70. L'oxydoréduction du fluide réducteur et du fluide oxydant produit des électrons qui circulent de la première électrode vers la deuxième électrode. En général, les électrodes sont montées de part et d'autre d'une membrane échangeuse de protons ou sur une membrane à oxyde solide.

Le fluide réducteur est par exemple de l'hydrogène et le fluide oxydant est par exemple de l'oxygène.

La réaction entre les fluides oxydant et réducteur produit un fluide de sortie, notamment un liquide tel que l'eau.

La pile à combustible 70 est raccordée électriquement au réseau électrique 20.

Dans cet exemple, l'ensemble de conversion 60 comporte un électrolyseur 72 destiné à produire, à partir d'un fluide de départ (par exemple de l'eau), le ou chaque fluide d'alimentation, et pour chaque fluide d'alimentation produit par l'électrolyseur 72, un conduit de sortie 74A, 74B débouchant dans un réservoir 62A, 62B respectif de stockage de ce fluide.

L'ensemble de conversion 60 comporte en outre un réservoir 76 de fluide de départ et un conduit amont 78 d'alimentation de l'électrolyseur 72 en fluide de départ.

L'électrolyseur 72 est raccordé électriquement au réseau électrique 20. Lorsque l'électrolyseur 72 est alimenté électriquement par le réseau électrique 20, il est apte à électrolyser le fluide de départ provenant du réservoir 76 à travers le conduit amont 78 pour former chaque fluide d'alimentation.

Dans l'exemple représenté sur la figure 1, l'électrolyseur 72 est destiné à former un fluide oxydant et un fluide réducteur, le fluide oxydant et le fluide réducteur étant propres à réagir dans la source secondaire 58 pour engendrer une puissance électrique.

Chaque réservoir 62A, 62B est raccordé à l'électrolyseur 72 par l'intermédiaire d'un conduit de sortie 74A, 74B respectif. Il est raccordé en outre à la source 58 par un conduit 80A, 80B aval respectif. La source 58 est raccordée au réservoir de fluide de départ par un conduit d'évacuation 82.

Le volume de chaque conduit de sortie 74A, 74B et de chaque conduit aval 80A, 80B est inférieur au volume du réservoir 62A, 62B auquel il est raccordé.

A titre d'exemple appliqué au domaine des avions d'affaires (pour des masses maximales au décollage inférieures à 100 000 livres), le volume de chaque réservoir 62A, 62B est compris entre 1 dm³ et 10 dm³.

Chaque réservoir 62A, 62B est avantageusement formé par une enceinte apte à recevoir un fluide d'alimentation à une pression comprise entre 0,15 bars absolus (en vol, dans le cas d'un conditionnement non pressurisé des réservoirs) et 60 bars absolus.

Chaque conduit aval 80A, 80B est muni d'un organe de régulation 64A, 64B respectif, disposé entre le réservoir 62A, 62B et la source secondaire 58.

Chaque organe de régulation 64A, 64B est propre à autoriser le passage d'un débit réglable de fluide d'alimentation depuis le réservoir 62A, 62B vers la source secondaire 58.

L'unité 66 est apte à piloter le fonctionnement de l'électrolyseur 72 et de la source secondaire 58. Elle est propre à réguler le débit de fluide d'alimentation alimentant la source secondaire 58 par l'intermédiaire des organes de régulation 64A, 64B.

L'ensemble de régulation 24 est pilotable entre une configuration inactive, une configuration intermédiaire de veille, une première configuration de régulation pour prélever de la puissance électrique sur le réseau 20, et une deuxième configuration de régulation pour réinjecter de la puissance électrique sur le réseau 20.

Dans la configuration inactive, la source secondaire 58 est inactive et ne produit aucune énergie électrique. L'électrolyseur 72 est également inactif.

Dans la configuration intermédiaire de veille, l'ensemble de conversion 60 est alimenté électriquement par le réseau électrique 20 pour produire un débit de fluide d'alimentation suffisant pour maintenir la source secondaire 58 en conditions opérationnelles.

Dans cette configuration, la source 58 produit une première puissance électrique de veille P1, avantageusement inférieure à 100 W, qui est restituée au réseau électrique 20.

Dans la première configuration de régulation, l'ensemble de conversion 60 est activé pour prélever une puissance électrique excédentaire sur le réseau 20 et pour produire chaque fluide d'alimentation à partir du fluide à électrolyser en vue de son stockage dans un réservoir 62A, 62B.

Dans la deuxième configuration de régulation, chaque réservoir 62A, 62B alimente la source secondaire 58 pour produire une énergie restituée au réseau électrique 20 avec une deuxième puissance électrique P2 supérieure à la puissance P1 de veille.

Le fonctionnement du système électrique 17 selon l'invention va maintenant être décrit.

Initialement, au sol, lorsque l'aéronef 10 est au parking, l'ensemble principal 18 de génération électrique, l'ensemble auxiliaire 22 et l'ensemble de régulation 24 sont inactifs.

Puis, avant le démarrage d'un moteur 18A, 18B, l'ensemble auxiliaire 22 est utilisé pour produire de l'énergie électrique fournie au réseau 20.

A cet effet, du combustible liquide est fourni au générateur auxiliaire 52 depuis le réservoir 36. La combustion du combustible dans une chambre de combustion (non représentée) entraîne un arbre rotatif qui produit de l'énergie électrique.

Lorsqu'au moins un moteur 16A, 16B est démarré, le moteur 16A, 16B entraîne en rotation le rotor du générateur 38A, 38B auquel il est accouplé. Ceci permet à l'ensemble principal 18 de produire une puissance électrique de consigne souhaitée. Cette puissance électrique est transmise au réseau 20 pour alimenter les différents équipements 14A à 14F présents dans les ensembles fonctionnels de l'aéronef, par exemple dans le cockpit, dans la cabine et/ou dans la soute.

L'ensemble de régulation 24 est alors placé dans sa configuration de veille illustrée par la figure 1.

Dans cette configuration, l'ensemble de conversion 60 prélève une faible puissance électrique sur le réseau électrique 20, par exemple inférieure à 200 W.

Du fluide de départ est prélevé dans le réservoir 76 et est amené vers l'électrolyseur 72 pour produire chaque fluide d'alimentation de la source secondaire 58.

Chaque fluide d'alimentation produit par l'ensemble 60 est convoyé jusqu'à un réservoir 62A, 62B respectif.

Par ailleurs, les organes de régulation 64A, 64B sont partiellement ouverts pour alimenter la source secondaire 58 en fluide d'alimentation à travers les conduites respectives 80A, 80B.

Une réaction d'oxydoréduction se produit alors dans la pile 70 entre les fluides oxydant et réducteur pour engendrer un courant d'électrons qui est transmis vers le réseau électrique 20.

Le liquide obtenu est convoyé vers le réservoir 76 à travers la conduite d'évacuation 82.

Avantageusement, la source 58 produit une puissance électrique de veille en continu durant le vol de l'aéronef, ce qui garantit que la source 60 fonctionne, qu'elle est maintenue en température, par exemple à une température supérieure à 60°C, afin d'être maintenue en conditions opérationnelles.

La puissance électrique de veille P1 fournie par la source 58 est cependant maintenue au minimum, par exemple en étant inférieure à 100 W pour limiter la puissance électrique que doit fournir le réseau électrique 20 pour alimenter l'ensemble de conversion 60.

Les organes de régulation 64A et 64B sont calibrés pour que, dans cette configuration, le débit de chaque fluide d'alimentation produit par l'ensemble de conversion 60 correspond sensiblement au débit d1 de chaque fluide d'alimentation consommé par la source secondaire 58. En conséquence, il n'y a pas, dans cette configuration, de variation de pression dans les réservoirs 62A, 62B.

Une puissance électrique de consigne souhaitée est ainsi maintenue sur le réseau électrique 20 par l'ensemble de régulation 24.

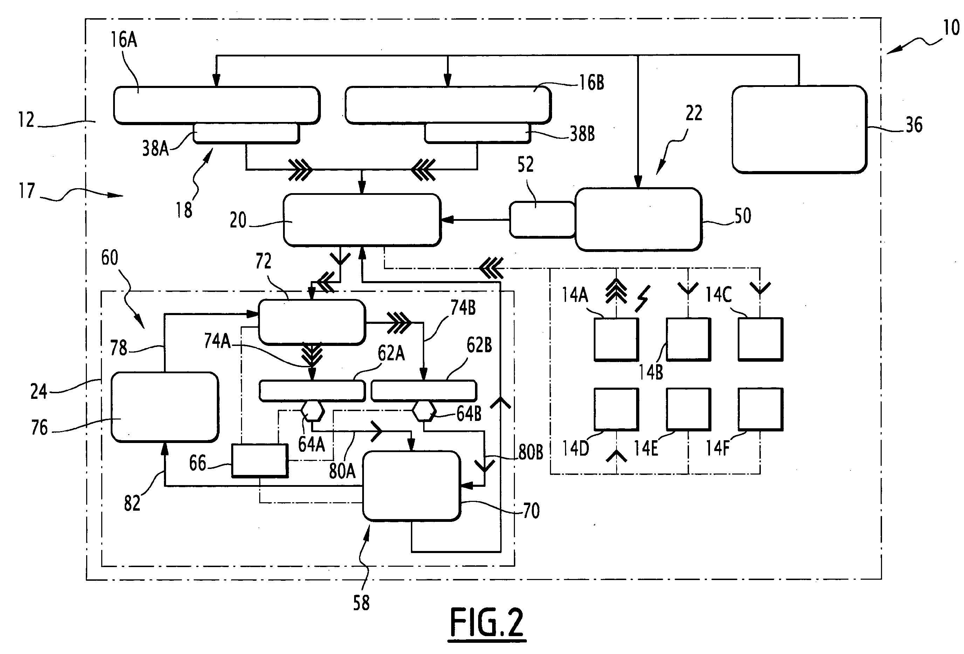

Dans certains cas, comme illustré par la figure 2, une puissance électrique additionnelle est injectée ponctuellement sur le réseau 20, notamment lors du passage d'un équipement fonctionnel 14A à 14F dans un état de régénération, dans lequel il engendre une puissance réinjectée sur le réseau 20.

Lorsque cette puissance électrique additionnelle est détectée, l'unité 66 passe l'ensemble 24 dans sa première configuration de régulation.

La puissance électrique additionnelle injectée sur le réseau 20 est alors consommée par l'ensemble de conversion 60 pour alimenter électriquement l'électrolyseur 72.

L'électrolyseur 72 produit alors un débit d2 de chaque fluide d'alimentation supérieur au débit d1 nécessaire à l'alimentation de la source secondaire 58.

Le fluide d'alimentation produit en excès est stocké dans les réservoirs 62A, 62B, ce qui provoque une augmentation de la pression dans les réservoirs 62A, 62B.

Les organes de régulation 64A et 64B sont ainsi calibrés pour que la pression dans les réservoirs puisse s'élever jusqu'à une pression maximale légèrement inférieure à la pression maximale que peut délivrer l'électrolyseur 72. Au-delà de cette pression, les organes de régulation 64A, 64B sont ouverts pour laisser les fluides s'écouler hors des réservoirs 62A, 62B.

Par ailleurs, le débit d1 de chaque fluide d'alimentation délivré à la source 58 reste sensiblement identique à celui délivré dans la configuration de veille, de sorte que la puissance électrique fournie au réseau 20 par la source 58 reste sensiblement identique.

Par suite, la puissance électrique disponible sur le réseau 20 reste sensiblement constante et égale à la puissance de consigne souhaitée.

Par ailleurs, la puissance électrique additionnelle a été utilisée par l'électrolyseur 72 pour produire les fluides d'alimentation de la source 58 qui sont stockés dans les réservoirs 62A, 62B et constituent une réserve d'énergie potentielle chimique.

Cette énergie potentielle chimique peut alors être utilisée ultérieurement pour produire une puissance électrique de complément à fournir au réseau 20, par exemple lorsque la charge augmente sur le réseau et/ou lorsque la puissance fournie par l'un ou/et l'autre des ensembles de génération 18, 22 diminue.

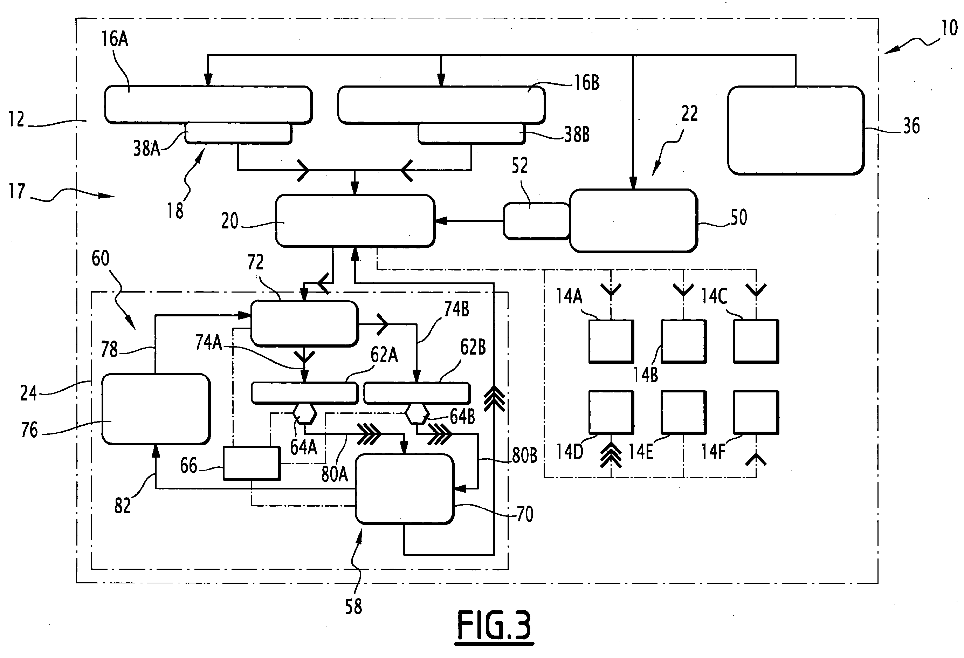

Lorsque le réseau électrique 20 doit recevoir une puissance électrique de complément, l'ensemble de régulation 24 passe dans sa deuxième configuration de régulation, illustrée par la figure 3.

Dans cette configuration, l'unité 66 ouvre les organes de commande 64A, 64B pour fournir à la source 58 un débit d2 de chaque fluide d'alimentation supérieur au débit d1 fourni dans la configuration de veille ou dans la première configuration de régulation.

La quantité de fluide d'alimentation contenue dans chaque réservoir 62A, 62B diminue alors, au fur et à mesure de la consommation de fluide d'alimentation par la source 58.

La source secondaire 58 produit, à partir du gaz d'alimentation reçu de chaque réservoir 62A, 62B, une deuxième puissance électrique P2 de régulation supérieure à la première puissance P1 de veille. Cette puissance P2 est par exemple supérieure à 100 W.

La puissance électrique P2 est alors fournie au réseau 20 et permet de participer à la génération de puissance au sein du réseau.

Cette puissance électrique P2 additionnelle réduit la quantité de puissance devant être fournie par l'ensemble principal 18, et donc diminue la quantité de carburant consommée par les moteurs à partir du réservoir 36 pour fournir cette puissance.

Le système électrique 17 selon l'invention permet donc d'absorber les surpuissances électriques présentes ponctuellement sur le réseau 20, d'utiliser cette puissance électrique pour la convertir en au moins un fluide d'alimentation apte à être utilisé dans une source secondaire 58 de puissance électrique, puis de restituer une puissance électrique de complément au réseau 20, au gré du besoin.

Le système 17 fonctionne en continu lors du vol, puisque la source 58 est maintenue en permanence en conditions opérationnelles.

Le système 20 selon l'invention ne nécessite pas de stocker de manière permanente des réactifs spécifiques dans l'aéronef 10, ni de fournir un ou plusieurs réservoirs de combustibles supplémentaires.

La seule utilité nécessaire au fonctionnement du système 17 est un fluide à électrolyser qui est de préférence, de l'eau. Le système 17 ne requiert pas d'opérations chimiques complexes telles que le reformage de carburant, et n'engendre pas de surplus de masse, ni d'exigences de remplissage avant chaque vol.

Contrairement aux systèmes électriques de l'état de la technique, la puissance excédentaire présente ponctuellement sur le réseau n'est pas convertie en chaleur et n'est pas perdue, mais est au contraire transformée en énergie potentielle chimique qui peut être exploitée ultérieurement pour engendrer de la puissance électrique qui sera fournie au réseau électrique de l'aéronef.

Le système selon l'invention permet ainsi d'améliorer le rendement énergétique global de l'aéronef et d'utiliser de façon optimale l'énergie produite par les servitudes aptes à rejeter de la puissance sur le réseau de l'aéronef.

Le système électrique 17 selon l'invention s'affranchit donc des dispositifs de dissipation thermique qui sont intégrés dans les équipements électriques fonctionnels de l'état de la technique, tels que les résistances de décharge et les unités de contrôle de ces résistances. Ceci allège la masse du système électrique et donc de l'aéronef.

Le bilan énergétique global de l'aéronef 10 est donc grandement amélioré.

En variante, lorsque le réseau électrique 20 de l'avion fonctionne en courant alternatif, le système 17 selon l'invention reste opérationnel en disposant un onduleur entre l'ensemble de conversion 60 et le réseau électrique 20 par exemple au niveau de la pile 70.

## Revendications

1. Système électrique (17) d'aéronef (10), comprenant :
- un réseau électrique (20), destiné à alimenter électriquement au moins un équipement fonctionnel (14A à 14F) de l'aéronef (10) ;
- un ensemble de régulation (24) propre à maintenir une puissance électrique souhaitée sur le réseau électrique (20), la puissance électrique souhaitée étant fournie par au moins un ensemble de génération électrique (18, 22) de l'aéronef (10); l'ensemble de régulation (24) comportant :
- une source secondaire (58) de puissance électrique ;
- un ensemble (60) de conversion d'une puissance électrique additionnelle injectée sur le réseau électrique (20),
**caractérisé en ce que** l'ensemble de conversion (60) est propre, dans une première configuration de régulation électrique, à consommer la puissance électrique additionnelle présente sur le réseau électrique (20) pour engendrer au moins un fluide d'alimentation de la source secondaire (58),
l'ensemble de régulation (24) comportant :
- un réservoir (62A, 62B) pour chaque fluide d'alimentation, interposé entre l'ensemble de conversion (60) et la source secondaire (58) pour recueillir le fluide d'alimentation produit par l'ensemble de conversion (60),
, **en ce que** la source secondaire (58) est formée par une pile à combustible (70), et **en ce que** l'ensemble de conversion (60) comporte un électrolyseur (72).

2. Système (17) selon l'une quelconque des revendications précédentes, **caractérisé en ce que** la source secondaire (58) est raccordée électriquement au réseau électrique (20) pour réinjecter, sur le réseau électrique (20), une puissance électrique complémentaire produite à partir du ou de chaque fluide d'alimentation dans une deuxième configuration de régulation électrique.

3. Système (17) selon la revendication 2, **caractérisé en ce que** l'ensemble de régulation (24) est pilotable entre :
- une configuration de veille, dans laquelle la source secondaire (58) est alimentée par un premier débit (d1) de fluide d'alimentation provenant de chaque réservoir (62A, 62B) pour produire une première puissance électrique de veille (P1),
- la première configuration de régulation, et
- la deuxième configuration de régulation,
et **en ce que**, dans la deuxième configuration de régulation, la source secondaire (58) est alimentée par un deuxième débit de fluide d'alimentation (d2) provenant de chaque réservoir (62A, 62B), le deuxième débit (d2) étant supérieur au premier débit (d1) pour produire une deuxième puissance électrique (P2) de régulation supérieure à la première puissance électrique de veille (P1).

4. Système (17) selon l'une quelconque des revendications précédentes, **caractérisé en ce que** l'ensemble de conversion (60) est propre à produire au moins deux fluides d'alimentation de la source secondaire (58), le système comportant pour chaque fluide d'alimentation, un réservoir (62A, 62B) distinct.

5. Système (17) selon l'une quelconque des revendications précédentes, **caractérisé en ce qu'**il comporte au moins un équipement fonctionnel (14A à 14F) raccordé au réseau électrique (20), l'équipement fonctionnel (14A à 14F) étant propre à basculer entre un état actif, dans laquelle il prélève une puissance électrique sur le réseau, et un état de régénération, dans laquelle il injecte une puissance électrique additionnelle sur le réseau électrique (20).

6. Système (17) selon la revendication 5, **caractérisé en ce que** l'équipement fonctionnel (14A à 14F) est choisi parmi un actionneur, notamment un actionneur électromécanique, l'actionneur étant avantageusement destiné à déplacer des commandes de vol, tels que des gouvernes ou des volets ou étant destiné à actionner des systèmes d'atterrissage de l'aéronef tels que l'ouverture/fermeture de trappes, le déploiement/rétractation du train d'atterrissage ou la motorisation électrique du train d'atterrissage pour sa fonction de déplacement au sol.

7. Système (17) selon l'une quelconque des revendications précédentes, **caractérisé en ce que** l'ensemble de régulation (24) comporte, entre chaque réservoir (62A, 62B) et la source secondaire (58), un organe de régulation (64A, 64B) du débit de fluide d'alimentation distribué depuis le réservoir (62A, 62B) vers la source secondaire (58).

8. Procédé de gestion électrique d'un aéronef (10), comprenant les étapes suivantes :
- maintien d'une puissance électrique souhaitée sur le réseau électrique (20) par un ensemble de régulation (24), la puissance électrique souhaitée étant fournie par au moins un ensemble de génération électrique (18, 22) de l'aéronef (10) ;
- alimentation électrique d'au moins un équipement fonctionnel (14A à 14F) de l'aéronef (10) raccordé électriquement au réseau électrique (20),
- injection d'une puissance électrique additionnelle sur le réseau électrique (20) ;
**caractérisé en ce que** le procédé comporte les phases suivantes :
- consommation de la puissance électrique additionnelle présente sur le réseau électrique (20) par un ensemble de conversion (60) raccordé électriquement au réseau électrique (20), pour engendrer au moins un fluide d'alimentation d'une source secondaire (58) de puissance électrique ;
- stockage du ou de chaque fluide d'alimentation de la source secondaire (58) dans au moins un réservoir (62A, 62B), la source secondaire (58) étant formée par une pile à combustible (70), la production de puissance électrique résultant de la génération d'un courant d'électrons dans la pile à combustible (70) et **en ce que** lors de l'étape de consommation, la puissance électrique consommée est utilisée par l'ensemble de conversion (60) pour électrolyser un fluide de départ et former chaque fluide d'alimentation.

9. Procédé selon la revendication 8, **caractérisé en ce qu'**à l'étape d'alimentation, l'équipement fonctionnel (14A à 14F) occupe un état actif, dans lequel il prélève une puissance électrique sur le réseau électrique (20), et **en ce que**, à l'étape d'injection, l'équipement fonctionnel (14A à 14F) occupe un état de régénération dans lequel il injecte la puissance électrique additionnelle sur le réseau électrique (20).

10. Procédé selon l'une quelconque des revendications 8 ou 9, **caractérisé en ce qu'**il comporte au moins une étape de réinjection d'une puissance électrique complémentaire sur le réseau électrique (20) par une source secondaire (58) de puissance électrique, l'étape de réinjection comportant la fourniture d'au moins un fluide d'alimentation provenant de chaque réservoir (62A, 62B) à la source secondaire (58), la production d'une puissance électrique à partir de chaque fluide d'alimentation par la source secondaire (58), et l'injection de la puissance électrique produite par la source secondaire (58) sur le réseau électrique (20).

11. Procédé selon l'une quelconque des revendications 8 à 10, **caractérisé en ce que** dans une première étape de réinjection, la source secondaire (58) est alimentée par un premier débit (d1) de fluide d'alimentation provenant de chaque réservoir (62A, 62B) et produit une première puissance électrique de veille (P1), et **en ce que** dans une deuxième étape de réinjection, la source secondaire (58) est alimentée par un deuxième débit (d2) de fluide d'alimentation provenant de chaque réservoir (62A, 62B), le deuxième débit (d2) étant supérieur au premier débit (d1) pour produire une deuxième puissance électrique (P2) de régulation supérieure à la première puissance électrique de veille (P1).

## Patentansprüche

1. Elektrisches System (17) eines Flugzeugs (10), aufweisend:
- ein elektrisches Netz (20) zum elektrischen Versorgen mindestens einer funktionellen Ausrüstung (14A-14F) des Flugzeugs (10);
- eine Anordnung zum Regeln (24), welche geeignet ist, eine gewünschte elektrische Leistung an das elektrische Netz (20) beizubehalten, wobei die gewünschte elektrische Leistung von mindestens einer Anordnung zur Stromerzeugung (18, 22) des Flugzeugs (10) zugeführt wird;
wobei die Anordnung zum Regeln (24) aufweist:
- eine sekundäre Quelle (58) elektrischer Leistung;
- eine Anordnung (60) zum Wandeln einer zusätzlichen elektrischen Leistung, welche in das elektrische Netz (20) eingespeist wird,
**dadurch gekennzeichnet, dass** die Anordnung zum Wandeln (60) geeignet ist, in einer ersten Konfiguration des elektrischen Regelns die zusätzliche elektrische Leistung zu verbrauchen, welche auf dem elektrischen Netz (20) vorhanden ist, um mindestens ein Fluid zum Versorgen der sekundären Quelle (58) zu erzeugen;
wobei die Anordnung zum Regeln (24) aufweist:
- einen Behälter (62A, 62B) für jedes Fluid zum Versorgen, welcher zwischen der Anordnung zum Wandeln (60) und der sekundären Quelle (58) angeordnet ist, um das durch die Anordnung zum Wandeln (60) erzeugte Fluid zum Versorgen zu sammeln,
dass die sekundäre Quelle (58) durch eine Brennstoffzelle (70) gebildet wird, und dass die Anordnung zum Wandeln (60) eine Elektrolysezelle (72) aufweist.

2. System (17) nach einem der vorhergehenden Ansprüche, **dadurch gekennzeichnet, dass** die sekundäre Quelle (58) mit dem elektrischen Netz (20) elektrisch verbunden ist, um eine komplementäre elektrische Leistung auf das elektrische Netz (20) rückzuinjizieren, welche aus dem oder jedem Fluid zum Versorgen in einer zweiten Konfiguration elektrisches Regelns erzeugt wird.

3. System (17) nach Anspruch 2, **dadurch gekennzeichnet, dass** die Anordnung zum Regeln (24) steuerbar ist zwischen:
- einer Standby-Konfiguration, bei der die sekundäre Quelle (58) von einem ersten Strom (d1) des Fluids zum Versorgen eingespeist wird, welcher aus jedem Behälter (62A, 62B) kommt, um eine erste elektrische Standby-Leistung (P1) zu erzeugen,
- der ersten Konfiguration zum Regeln , und
- der zweiten Konfiguration zum Regeln,
und dass in der zweiten Konfiguration zum Regeln die sekundäre Quelle (58) durch einen zweiten Strom des Fluids zum Versorgen (d2) eingespeist wird, welcher aus jedem Behälter (62A, 62B) kommt, wobei der zweite Strom (d2) größer als der erste Strom (d1) ist, um eine zweite elektrische Leistung (P2) zum Regeln zu erzeugen, welche größer als die erste elektrische Standby-Leistung (P1) ist.

4. System (17) nach einem der vorhergehenden Ansprüche, **dadurch gekennzeichnet, dass** die Anordnung zum Wandeln (60) geeignet ist, mindestens zwei Fluide zum Versorgen der sekundären Quelle (58) zu erzeugen, wobei das System für jedes Fluid zum Versorgen einen getrennten Behälter (62A, 62B) aufweist.

5. System (17) nach einem der vorhergehenden Ansprüche, **dadurch gekennzeichnet, dass** es mindestens eine funktionelle Ausrüstung (14A - 14F) aufweist, welche mit dem elektrischen Netz (20) verbunden ist, wobei die funktionelle Ausrüstung (14A - 14F) geeignet ist, zwischen einem aktiven Zustand, bei dem sie im Netzwerk eine elektrische Leistung aufnimmt, und einem regenerativen Zustand, bei dem sie eine zusätzliche elektrische Leistung an das Stromnetz (20) injiziert, zu wechseln.

6. System (17) nach Anspruch 5, **dadurch gekennzeichnet, dass** die funktionelle Ausrüstung (14A - 14F) aus einem Steller ausgewählt wird, insbesondere einem elektromechanischen Steller, wobei der Steller in vorteilhafter Weise zum Bewegen der Flugsteuerungen, wie Ruder oder Klappen oder zum Betätigen von Flugzeug-Landesystemen wie dem Öffnen / Schließen von Türen, Bereitstellen / Einfahren des Fahrwerks oder elektrischem Motorisieren des Fahrwerks für seine Bewegungsfunktion auf dem Boden bestimmt ist.

7. System (17) nach einem der vorhergehenden Ansprüche, **dadurch gekennzeichnet, dass** die Anordnung zum Regeln (24) zwischen jedem Behälter (62A, 62B) und der sekundären Quelle (58) ein Organ zum Regeln (64A, 64B) des Stroms des Fluids zum Versorgen aufweist, welches aus dem Behälter (62A, 62B) an die sekundäre Quelle (58) abgegeben wird.

8. Verfahren zur elektrischen Verwaltung eines Flugzeugs (10) aufweisend die folgenden Schritte:
- Halten einer gewünschten elektrischen Leistung an das Stromnetz (20) durch eine Anordnung zum Regeln (24), wobei die gewünschte elektrische Leistung durch mindestens eine Anordnung zur Stromerzeugung (18, 22) des Flugzeugs (10) zugeführt wird;
- elektrisches Versorgen mindestens einer funktionellen Ausrüstung (14A - 14F) des Flugzeugs (10), welche elektrisch mit dem elektrischen Netz (20) verbunden ist,
- Injizieren einer zusätzlichen elektrischen Leistung in das elektrische Netz (20),
**dadurch gekennzeichnet, dass** das Verfahren die folgenden Schritte aufweist:
- Verbrauchen der zusätzlichen elektrischen Leistung, die auf dem elektrischen Netz (20) vorhanden ist, durch eine Anordnung zum Wandeln (60), welche elektrisch mit dem Netz (20) verbunden ist, um mindestens ein Fluid zum Versorgen einer sekundären Quelle (58) elektrischer Leistung zu erzeugen;
- Speichern des oder jedes Fluids zum Versorgen der sekundären Quelle (58) in mindestens einem Behälter (62A, 62B), wobei die sekundäre Quelle (58) durch eine Brennstoffzelle (70) gebildet wird, wobei die Erzeugung elektrischer Leistung von der Erzeugung eines Elektronenstroms in der Brennstoffzelle (70) entsteht, und dass während des Schritts des Verbrauchens die verbrauchte elektrische Leistung durch die Anordnung zum Wandeln (60) verwendet wird, um ein Ausgangsfluid zu elektrolysieren und jedes Fluid zum Versorgen zu erzeugen.

9. Verfahren nach Anspruch 8, **dadurch gekennzeichnet, dass** bei dem Schritt des Versorgens die funktionelle Ausrüstung (14A - 14F) in einem aktiven Zustand ist, bei dem sie eine elektrische Leistung an das elektrische Netz (20) aufnimmt, und dass bei dem Schritt des Injizierens die funktionelle Ausrüstung (14A - 14F) in einem regenerativen Zustand ist, bei dem sie die zusätzliche elektrische Leistung in das elektrische Netz (20) injiziert.

10. Verfahren nach einem der Ansprüche 8 oder 9, **dadurch gekennzeichnet, dass** es mindestens einen ersten Schritt des Rückinjizierens einer komplementären elektrischen Leistung in das elektrische Netz (20) durch eine sekundäre Quelle (58) elektrischer Leistung aufweist, wobei der Schritt des Rückinjizierens mindestens die Zufuhr eines aus jedem Behälter (62A, 62B) kommenden Fluids zum Versorgen an die sekundäre Quelle (58), die Erzeugung einer elektrischen Leistung aus jedem Fluid zum Versorgen durch die sekundäre Quelle (58) und die Injektion der elektrischen Leistung, welche von der sekundären Quelle (58) an das elektrische Netz (20) erzeugt wird, aufweist.

11. Verfahren nach einem der Ansprüche 8 bis 10, **dadurch gekennzeichnet, dass** in einem ersten Schritt des Rückinjizierens die sekundäre Quelle (58) durch einen ersten Strom (d1) des Fluids zum Versorgen eingespeist wird, welches aus jedem Behälter (62A, 62B) kommt, und eine erste elektrische Stanby-Leistung (P1) erzeugt, und dass in einem zweiten Schritt des Rückinjizierens die sekundäre Quelle (58) durch einen zweiten Strom (d2) des Fluids zum Versorgen eingespeist wird, welches aus jedem Behälter (62A, 62B) kommt, wobei der zweite Strom (d2) größer als der erste Strom (d1) ist, um eine zweite elektrische Leistung (P2) zum Regeln zu erzeugen, welche größer als die erste elektrische Standby-Leistung (P1) ist.

## Claims

1. An aircraft (10) electrical system (17), comprising:
- an electrical network (20), designed to electrically power at least one functional equipment (14A to 14F) of the aircraft (10);
- a regulating assembly (24) capable of maintaining a desired electrical power on the electrical network (20), the desired electrical power being provided by at least one electricity generating assembly (18, 22) of the aircraft (10);
the regulating assembly (24) including:
- a secondary electrical power source (58);
- a conversion assembly (60) for additional electrical power injected on the electrical network (20),
**characterized in that** the conversion assembly (60) is able, in a first electrical regulating configuration, to consume the additional electrical power present on the electrical network (20) to create at least one supply fluid for the secondary source (58);
the regulating assembly (24) comprising:
- a reservoir (62A, 62B) for each supply fluid, inserted between the conversion assembly (60) and the secondary source (58) to collect the supply fluid produced by the conversion assembly (60), **in that** the secondary source (58) is formed by a fuel cell (70), and **in that** the conversion assembly (60) comprises an electrolyzer (72).

2. The system (17) according to any one of the preceding claims, **characterized in that** the secondary source (58) is electrically connected to the electrical network (20) to reinject, on the electrical network (20), additional electrical power produced from the or each supply fluid in the second electrical regulating configuration.

3. The system (17) according to claim 2, **characterized in that** the regulating assembly (24) can be driven between:
- a standby configuration, in which the secondary source (58) is supplied by a first supply fluid flow rate (d1) coming from each reservoir (62A, 62B) to produce a first standby electrical power (P1),
- the first regulating configuration, and
- the second regulating configuration,
and in the second regulating configuration, the secondary source (58) is supplied by a second supply fluid flow rate (d2) coming from each reservoir (62A, 62B), the second flow rate (d2) being higher than the first flow rate (d1) to produce a second electrical regulating power (P2) higher than the first standby electric power (P1).

4. The system (17) according to any one of the preceding claims, **characterized in that** the conversion assembly (60) is capable of producing at least two supply fluids of the secondary source (58), the system including a separate reservoir (62A, 62B) for each supply fluid.

5. The system (17) according to any one of the preceding claims, **characterized in that** it includes a functional equipment (14A to 14F) connected to the electrical network (20), the functional equipment (14A to 14F) being capable of switching between an active state, in which it withdraws electric power on the network, and a regenerating state, in which it injects additional electric power on the electric network (20).

6. The system (17) according to claim 5, **characterized in that** the functional equipment (14A to 14F) is chosen from among an actuator, in particular an electromechanical actuator, the actuator advantageously being designed to move flying controls, such as control surfaces or flaps, or being designed to actuate landing systems of the aircraft such as the opening/closing of hatches, the deployment/retraction of the landing gear or the electric driving of the landing gear for its ground movement function.

7. The system (17) according to any one of the preceding claims, **characterized in that** the regulating assembly (24) includes, between each reservoir (62A, 62B) and the secondary source (58), a regulating member (64A, 64B) for the supply fluid flow rate distributed from the reservoir (62A, 62B) toward the secondary source (58).

8. An electricity management method for an aircraft (10), comprising the following steps:
- maintaining a desired electrical power on the electrical network (20) by a regulating assembly (24), the desired electrical power being provided by at least one electricity generating assembly (18, 22) of the aircraft (10);
- supplying electricity for at least one functional equipment (14A to 14F) of the aircraft (10) electrically connected to the electrical network (20),
- injecting additional electrical power on the electrical network (20);
**characterized in that** the method includes the following phases:
- consuming the additional electric power present on the electrical network (20) by a conversion assembly (60) electrically connected to the electrical network (20) to create at least one supply fluid for a secondary electric power source (58);
- storing the or each supply fluid of the secondary source (58) in at least one reservoir (62A, 62B), the secondary source (58) being formed by a fuel cell (70), the production of electric power resulting from the generation of an electron current in the fuel cell (70), and **in that** during the consumption step, the electric power consumed is used by the conversion assembly (60) to electrolyze a starting fluid and form each supply fluid.

9. The method according to claim 8, **characterized in that** during the supply step, the functional equipment (14A to 14F) is in an active state, in which it withdraws electric power from the electrical network (20), and during the injection step, the functional equipment (14A to 14F) is in a regenerating state wherein it injects the additional electric power on the electrical network (20).

10. The method according to any one of claims 8 or 9, **characterized in that** it includes a step for reinjecting additional electric power on the electrical network (20) through a secondary electric power source (58), the reinjection step including providing at least one supply fluid coming from each reservoir (62A, 62B) to the secondary source (58), producing electric power from each supply fluid by the secondary source (58), and injecting the electric power produced by the secondary source (58) on the electrical network (20).

11. The method according to any one of claims 8 or 10, **characterized in that** in a first reinjection step, the secondary source (58) is supplied by a first supply fluid flow rate (d1) coming from each reservoir (62A, 62B) and produces a first standby electric power (P1), and **in that** in the second reinjection step, the secondary source (58) is supplied by a second supply fluid flow rate (d2) coming from each reservoir (62A, 62B), the second flow rate (d2) being higher than the first flow rate (d1) to produce a second electric regulating power (P2) higher than the first electric standby power (P1).
